# EUROPÄISCHE PATENTANMELDUNG

(11) **EP 4 556 864 A2**
(43) Veröffentlichungstag der Anmeldung: **21.05.2025**
(21) Anmeldenummer: 25160691.9
(22) Anmeldetag: 23.04.2021
(51) Int. Cl.: G01F 1/60

(54) **MAGNETISCH-INDUKTIVE DURCHFLUSSMESSVORRICHTUNG**

(30) Priorität: 29.05.2020 DE 102020114517
(62) Teilanmeldung aus: 21722167.0
(71) Anmelder: Endress+Hauser Flowtec AG, 4153 Reinach (CH)
(72) Erfinder: Tschambser, Florent, 68220 Hesingue (FR); Sulzer, Thomas, 4058 Basel (CH); Spahlinger, Andre, 79415 Bad Bellingen (DE); Bier, Thomas, 4125 Riehen (CH)
(74) Vertreter: Endress + Hauser Group Services (Deutschland) AG+Co. KG

(57) **Zusammenfassung**

Die Erfindung betrifft ein magnetisch-induktives Durchflussmessgerät (1), umfassend:
- eine Vorrichtung (5) zum Erzeugen eines Magnetfeldes mit einer Selbstinduktivität (L), wobei die Vorrichtung zum Erzeugen des Magnetfeldes eine Spulenanordnung (24) umfasst;
- eine Vorrichtung (8) zum Abgreifen einer im fließfähigen Medium induzierten Messspannung;
- eine Betriebsschaltung (7), welche dazu eingerichtet ist ein Betriebssignal (11) an die Spulenanordnung (24) aufzubringen, wobei das Betriebssignal (11) Betriebssignalparameter aufweist;
- eine Messschaltung (23), welche dazu eingerichtet ist einen Spulenstrom (*I*) der Spulenanordnung zu bestimmen;
- eine Reglerschaltung (10), welche dazu eingerichtet ist mindestens einen der Betriebssignalparametern so zu regeln, dass eine, von einem Selbstinduktionswert der Selbstinduktion (*L*) und einem Spulenstromwert des Spulenstromes (*I*) abhängige Funktion nicht von einem vorgegebenen ersten Sollwert abweicht, wobei die Funktion von einem Produkt des Selbstinduktionswertes und des Spulenstromwertes abhängt, wobei das Betriebssignal (11) einen, sich insbesondere zeitlich veränderlichen Spannungsverlauf (12) aufweist, welcher in Zeitintervalle (*t*) eingeteilt ist, wobei ein Vorzeichen des Spannungsverlaufes (12) in aufeinanderfolgenden Zeitintervallen (*t*) alterniert, wobei die Zeitintervalle (*t*) jeweils ein erstes Zeitteilintervall (*t_{hold}*) aufweist, in welchem eine, insbesondere über das gesamte erste Zeitteilintervall (*t_{hold}*) konstante erste Spannung (*U_{hold}*) an die Vorrichtung (5) zum Erzeugen des Magnetfeldes angelegt ist, wobei die Messschaltung (23) dazu eingerichtet ist, den Spulenstromwert während des ersten Zeitteilintervalles (*t_{hold}*) zu messen, wobei der geregelte Betriebssignalparameter eine von der erste Spannung (*U_{hold}*) abhängige Funktion umfasst oder die erste Spannung (*U_{hold}*) ist.

## Beschreibung

Die Erfindung betrifft eine magnetisch-induktive Durchflussmessvorrichtung zum Ermitteln einer strömungsgeschwindigkeitsabhängigen Messgröße eines fließfähigen Mediums.

Magnetisch-induktive Durchflussmessvorrichtungen werden zur Bestimmung der Durchflussgeschwindigkeit und des Volumendurchflusses eines fließenden Mediums in einer Rohrleitung eingesetzt. Dabei werden inline magnetisch-induktive Durchflussmessgeräte von magnetisch-induktiven Durchflussmesssonden unterschieden, die in eine seitliche Öffnung einer Rohrleitung eingesetzt werden. Ein magnetisch-induktives Durchflussmessgerät weist eine Vorrichtung zum Erzeugen eines Magnetfeldes auf, das ein Magnetfeld senkrecht zur Flussrichtung des fließenden Mediums erzeugt. Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Zudem weist ein magnetisch-induktives Durchflussmessgerät ein Messrohr auf, auf das die Vorrichtung zum Erzeugen des Magnetfeldes angeordnet ist. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung die Durchflussgeschwindigkeit und - mit Hinzunahme eines bekannten Rohrquerschnitts - der Volumendurchfluss ermittelt werden.

Im Gegensatz zu einem magnetisch-induktiven Durchflussmessgerät, welches ein Messrohr zum Führen des Mediums mit angebrachter Vorrichtung zum Erzeugen eines das Messrohr durchdringenden Magnetfeldes und Messelektroden umfasst, werden magnetisch-induktive Durchflussmesssonden mit ihrem üblicherweise kreiszylindrischen Gehäuse in eine seitliche Öffnung einer Rohrleitung eingeführt und fluiddicht fixiert. Ein spezielles Messrohr ist nicht mehr notwendig. Die eingangs erwähnte Messelektrodenanordnung und Spulenanordnung auf der Mantelfläche des Messrohrs entfällt, und wird durch ein im Inneren des Gehäuses und in unmittelbarer Nähe zu den Messelektroden angeordnete Vorrichtung zur Erzeugung eines Magnetfeldes ersetzt, welche so ausgestaltet ist, dass eine Symmetrieachse der Magnetfeldlinien des erzeugten Magnetfeldes die Frontfläche bzw. die Fläche zwischen den Messelektroden senkrecht schneidet. Im Stand der Technik gibt es bereits eine Vielzahl an unterschiedlichen magnetisch-induktiven Durchflussmesssonden.

Magnetisch-induktive Durchflussmessvorrichtungen finden vielfach Anwendung in der Prozess- und Automatisierungstechnik für Fluide ab einer elektrischen Leitfähigkeit von etwa 5 µS/cm. Entsprechende Durchflussmessvorrichtungen werden von der Anmelderin in unterschiedlichsten Ausführungsformen für verschiedene Anwendungsbereiche beispielsweise unter der Bezeichnung PROMAG oder MAGPHANT vertrieben.

Es existiert eine Vielzahl unterschiedlicher Verfahren zum Regeln des an die Spulenanordnung aufgeprägten Betriebssignales. Diese haben in der Regel das Ziel, ein Magnetfeld mit einer, über eine gesamte Messphase möglichst konstanten magnetischen Induktion zu erzeugen. So wird beispielsweise in der WO 2014/001026 A1 eine Steuerung gelehrt, bei der ein an die Spulenanordnung aufgebrachtes Spannungssignal derart geregelt wird, dass ein durch die Spulenanordnung fließender Spulenstrom in einer festgelegten Messphase einen Spulenstromsollwert erreicht und beibehält. Der durch die Spulenanordnung fließende Spulenstrom erzeugt ein Magnetfeld mit einer vom Spulenstrom abhängigen magnetischen Induktion. Dabei wird grundlegend angenommen, dass durch Einrichten eines fixen Spulenstromsollwertes auch die magnetische Induktion des erzeugten Magnetfeldes einen Sollwert reproduzierbar annimmt. Vorteilhaft an einer derartigen Regelung ist, dass die Regelung ohne das Messen der magnetischen Induktion auskommt. Es hat sich jedoch herausgestellt, dass sich - bedingt durch Temperaturänderungen und magnetische Störfelder - die magnetische Induktion nicht alleine durch das Regeln auf einen fixen Spulenstromsollwert reproduzieren lässt. Das hat zur Folge, dass der für die Ermittlung der strömungsgeschwindigkeitsabhängigen Messgröße angenommene Wert für die magnetische Induktion von der aktuell vorliegenden magnetischen Induktion im Messrohr abweicht. Abhängig von der Störgröße kann dies bei der Ermittlung der strömungsgeschwindigkeitsabhängigen Messgröße zu Abweichungen von bis zu 20% führen.

Der Erfindung liegt die Aufgabe zugrunde dem Problem Abhilfe zu schaffen.

Die Aufgabe wird gelöst durch die magnetisch-induktive Durchflussmessvorrichtung nach Anspruch 1.

Die erfindungsgemäße magnetisch-induktive Durchflussmessvorrichtung zum Ermitteln einer strömungsgeschwindigkeitsabhängigen Messgröße eines fließfähigen Mediums, umfasst:
- eine Vorrichtung zum Erzeugen eines Magnetfeldes mit einer Selbstinduktivität,
   wobei die Vorrichtung zum Erzeugen des Magnetfeldes eine Spulenanordnung umfasst;
- eine Vorrichtung zum Abgreifen einer im fließfähigen Medium induzierten Messspannung, insbesondere mindestens zwei bevorzugt diametral angeordnete Messelektroden;
- eine Betriebsschaltung, welche dazu eingerichtet ist ein Betriebssignal, insbesondere ein Spannungssignal an die Spulenanordnung aufzubringen,
   wobei das Betriebssignal Betriebssignalparameter aufweist;
- eine Messschaltung, welche dazu eingerichtet ist einen Spulenstrom der Spulenanordnung zu bestimmen;
- eine Reglerschaltung, welche dazu eingerichtet ist einen der Betriebssignalparametern so zu regeln, dass eine, von einem Selbstinduktionswert der Selbstinduktion und einem Spulenstromwert des Spulenstromes abhängige Funktion nicht von einem vorgegebenen ersten Sollwert abweicht.

Magnetisch-induktive Durchflussmessvorrichtungen mit einer derartigen Reglerschaltung weisen eine höhere Unempfindlichkeit gegenüber externer Störfelder auf. Besonders vorteilhaft ist die erfindungsgemäße Reglerschaltung im Einsatz in, über einen elektrochemischen Speicher versorgte magnetisch-induktive Durchflussmessvorrichtungen. Diese werden mit einem deutlich geringeren Strom bzw. einer deutlich geringeren Spannung betrieben, als herkömmliche über ein Stromnetz versorgte magnetisch-induktive Durchflussmessvorrichtungen. Das führt dazu, dass die feldführenden Bauteile im Einsatz nicht in eine magnetische Sättigung übergehen. Dadurch weisen sie zusätzlich zu einer besonders erhöhten Empfindlichkeit gegenüber externer Störfelder auch eine verlängerte Einschwingzeit bei der Inbetriebnahme auf, wobei die Einschwingzeit die Dauer beschreibt, die nach dem Einschalten der Durchflussmessvorrichtung abgewartet werden muss, bis die Vorrichtung zum Erzeugen des Magnetfeldes aufgewärmt ist und in der sich die magnetische Induktion stetig in Richtung Sollwert einpendelt. Magnetisch-induktive Durchflussmessvorrichtungen mit der erfindungsgemäßen Reglerschaltung weisen zudem einen deutlich geringeren Temperaturkoeffizienten des Magnetfeldes auf, wobei der Temperaturkoeffizient die Abweichung des Magnetfeldes pro Temperaturänderung beschreibt.

Der werkseitig oder bei der Inbetriebnahme ermittelte und bereitgestellte erste Sollwert kann in einem Justierverfahren oder durch eine Computersimulation bestimmt werden.

Vorteilhafte Ausgestaltung der Erfindung sind Gegenstand der Unteransprüche.

Eine Ausgestaltung sieht vor, dass die Funktion von einem Produkt des Selbstinduktionswertes und des Spulenstromwertes abhängt.

Die Empfindlichkeit der magnetisch-induktiven Durchflussmessvorrichtung gegenüber Störfeldern und Temperatureinflüssen wird durch das Regeln des einen Betriebssignalparameters in Abhängigkeit, von der von dem Selbstinduktionswert und dem Spulenstromwert abhängigen Funktion reduziert. Eine weitere Reduzierung der Empfindlichkeit kann dadurch erreicht werden, dass die Funktion so gewählt ist, dass sie von einem Produkt des Selbstinduktionswertes und des Spulenstromwertes abhängt. Gemäß einer Ausgestaltung hängt die Funktion ausschließlich von dem Produkt des Selbstinduktionswertes und des Spulenstromes ab.

Eine Ausgestaltung sieht vor, dass das Betriebssignal einen, sich insbesondere zeitlich veränderlichen Spannungsverlauf aufweist, welcher in Zeitintervalle eingeteilt ist,
wobei ein Vorzeichen des Spannungsverlaufes in aufeinanderfolgenden Zeitintervallen alterniert,
wobei die Zeitintervalle jeweils ein erstes Zeitteilintervall aufweist, in welchem eine, insbesondere über das gesamte erste Zeitteilintervall konstante erste Spannung an die Vorrichtung zum Erzeugen des Magnetfeldes angelegt ist.

Eine Ausgestaltung sieht vor, dass die Messschaltung dazu eingerichtet ist, den Spulenstromwert während des ersten Zeitteilintervalles zu messen,
wobei der geregelte Betriebssignalparameter eine von der ersten Spannung abhängige Funktion umfasst oder die erste Spannung ist.

In Abhängigkeit des im ersten Zeitintervall ermittelten Spulenstromwertes lässt sich eine Zeitkonstante ermitteln, die eine charakteristische Größe ist und die zumindest von einem elektrischen Widerstand und von der Selbstinduktion der Vorrichtung zum Erzeugen des Magnetfeldes abhängt. In die Ermittlung der Zeitkonstante kann ein einzelner Spulenstromwert, mindestens zwei Spulenstromwerte oder ein durch Spulenstromwerte gebildeter Spulenstromwertverlauf eingehen, wobei den Spulenstromwerten jeweils ein Zeitwert zugeordnet ist.

Die Reglerschaltung ist dazu eingerichtet, die erste Spannung so zu regeln, dass eine von der ermittelten Zeitkonstante und der ersten Spannung bzw. der von der ersten Spannung abhängigen Funktion abhängige Regelfunktion nicht von einem vorgegebenen Sollwert abweicht. Gemäß einer vorteilhaften Ausgestaltung hängt die obig eingeführte Funktion insbesondere ausschließlich von dem Produkt der Zeitkonstante und der ersten Spannung bzw. der von der ersten Spannung abhängigen Funktion ab. Die Zeitkonstante charakterisiert den Anstieg des Spulenstromes. So kann die Zeitkonstante beispielsweise so festgelegt sein, dass sie die jeweilige Dauer nach dem Umschalten der Spulenstromrichtung beschreibt, bis der Spulenstrom einen vorgegebenen Sollspulenstromwert annimmt. Die Zeitkonstante hängt von externen Magnetfeldern und von Änderungen des elektrischen Spulenwiderstandes ab.

Die Zeitkonstante lässt sich aus dem Anstieg des Spulenstromes nach dem Anlegen bzw. Umschalten der Spulenspannung ermitteln. Dafür kann beispielsweise der in der Regel nicht lineare, zeitliche Verlauf des Spulenstromes nach der Änderung der Spulenspannung mit einer Fitfunktion gefittet und unter Berücksichtigung des elektrischen Spulenwiderstandes und der Spulenspannung die Zeitkonstante bestimmt werden. Die Fitfunktion weist dabei eine Exponentialfunktion auf, mit einem die Zeitkonstante aufweisenden Exponenten. Alternativ kann die Dauer ermittelt werden die benötigt wird bis der Spulenstrom einen vorgegebenen Spulenstromsollwert annimmt und in Abhängigkeit dieser Dauer die Zeitkonstante bestimmt werden. Das Produkt der Zeitkonstante und der ersten Spannung ist gleich dem Produkt der Selbstinduktion und des Spulenstromes. Daher wird in Abhängigkeit der ermittelten Zeitkonstante die erste Spannung so geregelt, dass ein Produkt der Zeitkonstante und der ersten Spannung konstant ist.

Eine Ausgestaltung sieht vor, dass die Zeitintervalle jeweils ein zweites Zeitteilintervall aufweisen, in welchem eine, insbesondere über das zweite Zeitteilintervall konstante zweite Spannung an die Vorrichtung zum Erzeugen des Magnetfeldes angelegt ist,
wobei die zweite Spannung größer als die erste Spannung ist,
wobei im Spannungsverlauf das erste Zeitteilintervall auf das zweite Zeitteilintervall folgt,
wobei eine Dauer des zweiten Zeitteilintervalles kürzer als eine Dauer des ersten Zeitteilintervalles ist.

Eine Ausgestaltung sieht vor, dass ein Quotient aus der ersten Spannung und der zweiten Spannung über den Spannungsverlauf konstant ist,
wobei der geregelte Betriebssignalparameter die Dauer des zweiten Zeitteilintervalles und eine von der ersten Spannung abhängige Funktion umfasst,
wobei die Dauer des zweiten Zeitteilintervalles eine veränderliche und regelbare Größe ist,

wobei die Reglerschaltung dazu eingerichtet ist, die Dauer des zweiten Zeitteilintervalles und die von der ersten Spannung abhängige Funktion so zu regeln, dass eine Regelfunktion nicht von einem vorgegebenen zweiten Sollwert abweicht,
wobei die Regelfunktion von einem Produkt der Dauer des zweiten Zeitteilintervalles und der von der ersten Spannung abhängigen Funktion abhängt.

Durch das Festlegen des Quotienten der ersten Spannung und der zweiten Spannung ergibt sich eine vereinfachte Regelung. Die Reduktion der Empfindlichkeit gegenüber Störfelder und Temperatureinflüssen konnte durch die Festlegung der von dem Produkt der Dauer des zweiten Zeitteilintervalles und der von der ersten Spannung abhängigen Funktion als Betriebssignalparameter erreicht werden. Insbesondere durch das Regeln der veränderlichen und regelbaren Dauer des zweiten Zeitteilintervalles und der ersten Spannung bzw. der von der ersten Spannung abhängigen Funktion, so dass das Produkt zwischen den beiden Parameters konstant ist, konnte eine magnetisch-induktives Durchflussmessvorrichtungen mit besonders hoher Unempfindlichkeit und schneller Reaktionszeit erzielt werden. Zudem ist eine kontinuierliche Überwachung der Selbstinduktion nicht notwendig. Es hat sich herausgestellt, dass durch die erfindungsgemäße Ausgestaltung, bei der die von dem Produkt der Dauer des zweiten Zeitteilintervalles und der ersten Spannung abhängige Funktion konstant gehalten wird, auch die von dem Selbstinduktionswert der Selbstinduktion und dem Spulenstromwert des Spulenstromes bzw. deren Produkt abhängige Funktion konstant bleibt. Da der Quotient der ersten Spannung und der zweiten Spannung konstant ist, ist die von der ersten Spannung abhängige Funktion gleichzusetzen mit einer von der zweiten Spannung abhängigen Funktion.

Dabei kann der zweite Sollwert eine von dem ersten Sollwert abhängige Größe sein oder dem ersten Sollwert entsprechen.

Die Reglerschaltung ist dazu eingerichtet die Dauer des zweiten Zeitteilintervalles so zu regeln, dass zu einem festgelegten Zeitpunkt - beispielsweise der Beginn der Messphase, in der die induzierte Messspannung bestimmt wird - oder in einem Zeitabschnitt die Abweichung einer Prüfgröße von einem Prüfsollwert minimal ist. Die Prüfgröße kann ein Messwert des Spulenstromes, eine Summe bzw. ein Integral über einen Verlauf des Spulenstromes oder eine von dem Spulenstrom abhängige Funktion sein. Dabei kann der Prüfsollwert für die unterschiedlichen Zeitteilintervalle variieren. Alternativ kann die Reglerschaltung dazu ausgebildet und eingerichtet sein, die Dauer des zweiten Zeitteilintervalles so zu regeln, dass eine Dauer eines Einschwingens des Spulenstromes nach Beginn des ersten Zeitteilintervalles minimal ist.

Eine Ausgestaltung sieht vor, dass die von der ersten Spannung abhängige Funktion umgekehrt proportional zur Dauer des zweiten Zeitteilintervalles ist.

Dies kann durch das gleichzeitige Regeln der Dauer des zweiten Zeitteilintervalles und das Regeln der ersten Spannung erreicht werden.

Eine Ausgestaltung sieht vor, dass die zweite Spannung über die Zeitintervalle konstant ist,
wobei der mindestens eine geregelte Betriebssignalparameter die Dauer des zweiten Zeitteilintervalles und eine von der erste Spannung abhängige Funktion umfasst,
wobei die Dauer des zweiten Zeitteilintervalles und die von der erste Spannung abhängige Funktion so geregelt werden, dass eine Regelfunktion nicht von einem vorgegebenen zweiten Sollwert abweicht,
wobei die Regelfunktion von einem Produkt der von der erste Spannung abhängigen Funktion und der Dauer des zweiten Zeitteilintervalles abhängt.

Zudem kann die Regelfunktion von einem maximalen Spulenstromwert des zweiten Zeitteilintervalles und ein während des ersten Zeitteilintervalles ermittelter Spulenstromwert abhängen.

Die Reglerschaltung ist dazu eingerichtet, die Dauer des zweiten Zeitteilintervalles und die erste Spannung bzw. die von der ersten Spannung abhängige Funktion so zu regeln, dass die Regelfunktion nicht von einem vorgegeben zweiten Sollwert abweicht. Somit wird erreicht, dass auch die von der Selbstinduktionswert der Selbstinduktion und dem Spulenstromwert des Spulenstromes bzw. von deren Produkt abhängige Funktion in der Messphase den vorgegebenen zweiten Sollwert annimmt.

Eine Ausgestaltung sieht vor, dass der Spulenstrom im zweiten Zeitteilintervall einen maximalen Spulenstromwert annimmt,
wobei ein von einem Quotienten des maximalen Spulenstromwertes und eines während des ersten Zeitteilintervalles ermittelten Spulenstromwertes über das Betriebssignal konstant ist.

Diese Ausgestaltung vereinfacht die Regelung, da zusätzlich zur konstanten zweiten Spannung, der Quotient des maximalen Spulenstromwertes und des, während des ersten Zeitteilintervalles ermittelten Spulenstromwertes konstant gehalten wird. Dafür wird der Spulenstrom über eine Messschaltung ermittelt und der Reglerschaltung bereitgestellt.

Eine Ausgestaltung sieht vor, dass ein Spulenstrom im Zeitintervall, insbesondere im ersten Zeitteilintervall einen maximalen Spulenstromwert annimmt,
wobei der mindestens eine geregelte Betriebssignalparameter die Dauer des zweiten Zeitteilintervalles und eine von der ersten Spannung und dem maximalen Spulenstromwert abhängige Funktion umfasst,
wobei die Reglerschaltung dazu eingerichtet ist, die Dauer des zweiten Zeitteilintervalles und die von der erste Spannung abhängige Funktion so zu regeln, dass ein Regelfunktion nicht von einem zweiten Sollwert abweicht,
wobei die Regelfunktion von einem Produkt der Dauer des zweiten Zeitteilintervalles und der von der erste Spannung und dem maximalen Spulenstromwert abhängigen Funktion abhängt.

Eine Ausgestaltung sieht vor, dass die magnetisch-induktive Durchflussmessvorrichtung umfasst:
- eine Auswerteschaltung, welche dazu eingerichtet ist einen Ist-Wert einer von dem Selbstinduktionswert abhängigen Funktion zu ermitteln.

Somit lässt sich überprüfen, ob die von dem Selbstinduktionswert der Selbstinduktion und dem Spulenstromwert des Spulenstromes abhängige Funktion nicht von einem vorgegebenen ersten Sollwert abweicht.

Der Ist-Wert der von dem Selbstinduktionswert abhängigen Funktion lässt sich beispielsweise aus der Steigung des Spulenstromes um den Spulenstromnullpunkt ermitteln. In dem Fall ist der elektrische Widerstand annähernd null und thermische Einflüsse sind vernachlässigbar. Um Einflüsse durch Wirbelströme zu vermeiden, kann der Ist-Wert der von dem Selbstinduktionswert abhängigen Funktion in einem Zeitabschnitt ermittelt werden, in dem der Spulenstrom aufgrund des Umschaltens bzw. der Änderung der Spulenspannung überschwingt und danach abnimmt. Während des Überschwingens ist die zeitliche Änderung der Wirbelströme gering.

Die von dem Selbstinduktionswert abhängige Funktion kann beispielsweise die Selbstinduktion der Vorrichtung zum Erzeugen des Magnetfeldes sein.

Eine Ausgestaltung sieht vor, dass die Reglerschaltung dazu eingerichtet ist, bei einer Abweichung des Ist-Wertes von dem ersten Sollwert in einem Zeitintervall *t_{N},* die zweite Spannung so zu ändern, dass eine Abweichung von dem ersten Sollwert in einem zeitlich darauffolgenden Zeitintervall *t_{N+M}* kleiner ist,
wobei *N* eine natürliche Zahl ist und *M* ≥ 1, insbesondere *M =* 1 oder *M* = 2.

Eine Ausgestaltung sieht vor, dass die Reglerschaltung dazu eingerichtet ist, bei einer Abweichung des Ist-Wertes von dem ersten Sollwert in einem Zeitintervall *t_{N},* die erste Spannung so zu ändern, dass die Abweichung von dem ersten Sollwert in einem zeitlich darauffolgenden Zeitintervall *t_{N+M}* kleiner ist,
wobei *N* eine natürliche Zahl ist und *M* ≥ 1, insbesondere *M =* 1 oder *M = 2.*

Eine Ausgestaltung sieht vor, dass die Reglerschaltung dazu eingerichtet ist, bei einer Abweichung des Ist-Wertes von dem ersten Sollwert in einem Zeitintervall *t_{N},* einen Quotienten der ersten Spannung und der zweiten Spannung so zu ändern, dass die Abweichung in einem zeitlich darauffolgenden Zeitintervall *t_{N+M}* kleiner ist,
wobei *N* eine natürliche Zahl ist und *M* ≥ 1, insbesondere *M =* 1 oder *M = 2.*

Eine Ausgestaltung sieht vor, dass die Reglerschaltung dazu eingerichtet ist, bei einer Abweichung eines Spulenprüfstromwertes oder einer von dem Spulenprüfstromwert abhängigen Prüfgröße von dem ersten Sollwert in einem Zeitintervall *t_{N},* die Dauer des zweiten Zeitintervalles so zu ändern, dass die Abweichung in einem zeitlich darauffolgenden Zeitintervall *t_{N+M}* kleiner ist,
wobei *N* eine natürliche Zahl ist und *M* ≥ 1, insbesondere *M =* 1 oder *M = 2.*

Eine Ausgestaltung sieht vor, dass die magnetisch-induktive Durchflussmessvorrichtung als ein magnetisch-induktives Durchflussmessgerät ausgestaltet ist, umfassend ein Messrohr zum Führen des fließfähigen Mediums.

Eine Ausgestaltung sieht vor, dass die magnetisch-induktive Durchflussmessvorrichtung als eine magnetisch-induktive Durchflussmesssonde zum Einführen in eine seitliche Öffnung einer Rohrleitung ausgestaltet ist, umfassend ein mit dem Medium zu beaufschlagendes Gehäuse.

Die Erfindung wird anhand der nachfolgenden Figuren näher erläutert. Es zeigt:
Fig. 1: eine Ausgestaltung des erfindungsgemäßen magnetisch-induktiven Durchflussmessgerätes;
Fig. 2: eine erste Ausgestaltung des Verlaufes der Spannung und das entsprechend erzeugten Magnetfeld durch die Spulenanordnung;
Fig. 3: eine zweite Ausgestaltung des Verlaufes der Spannung und das entsprechend erzeugte Magnetfeld durch die Spulenanordnung; und
Fig. 4: eine perspektivische Ansicht auf eine teilweise geschnittene Ausgestaltung einer erfindungsgemäßen magnetisch-induktiven Durchflussmesssonde.

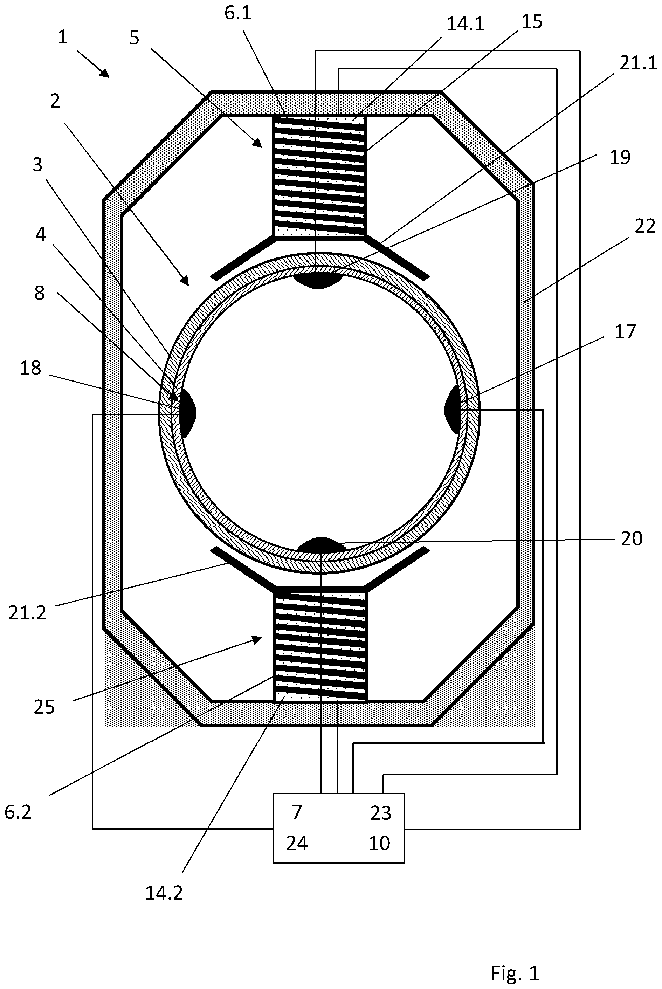

Die Fig. 1 zeigt einen Querschnitt einer Ausgestaltung des erfindungsgemäßen magnetisch-induktiven Durchflussmessgerätes 1. Der Aufbau und das Messprinzip eines magnetisch-induktiven Durchflussmessgerätes 1 sind grundsätzlich bekannt. Durch ein Messrohr 2 wird ein fließfähiges Medium geleitet, welches eine elektrische Leitfähigkeit aufweist. Das Messrohr 2 umfasst ein Trägerrohr 3, welches üblicherweise aus Stahl, Keramik, Kunststoff oder Glas gebildet ist oder diese zumindest umfassen. Eine Vorrichtung 5 zum Erzeugen eines Magnetfeldes ist so am Trägerrohr 3 angeordnet, dass sich die Magnetfeldlinien im Wesentlichen senkrecht zu einer durch eine Messrohrachse definierten Längsrichtung orientieren. Die Vorrichtung 5 zum Erzeugen des Magnetfeldes umfasst eine Sattelspule oder eine Spule 6. Durch eine Aufnahme 15 der Spule 6 erstreckt sich üblicherweise ein Spulenkern 14. Als Aufnahme 15 ist der durch die die Spule 6 bildende Spulendraht begrenzte Volumen zu verstehen. Die Aufnahme 15 der Spule 6 kann somit durch eine Spulenhalterung oder durch das gedachte eingeschlossene Volumen gebildet sein. Letzteres tritt ein, wenn der Spulendraht der Spule 6 direkt um den Spulenkern 14 gewickelt ist. Der Spulenkern 14 ist aus einem magnetisch leitenden, insbesondere weichmagnetischen Werkstoff gebildet. Die Vorrichtung 5 zum Erzeugen des Magnetfeldes umfasst einen Polschuh 21, der an einem Ende des Spulenkerns 14 angeordnet ist. Der Polschuh 21 kann separates Bauteil sein oder monolithisch mit dem Spulenkern 14 verbunden sein. In der abgebildeten Ausgestaltung der Fig. 1 weisen zwei diametral angeordnete Spulen 6.1, 6.2 jeweils einen Spulenkern 14.1, 14.2 und einen Polschuh 21.1, 21.2 auf. Die zwei Spulenkerne 14.1, 14.2 sind über eine Feldrückführung 22 miteinander verbunden. Die Feldrückführung 22 verbindet die jeweils voneinander abgewandten Seiten der Spulenkerne 14.1, 14.2 miteinander. Es sind jedoch auch magnetisch-induktive Durchflussmessgeräte mit genau einer Spule mit einem Spulenkern und ohne Feldrückführung bekannt. Die Spule 6 ist mit einer Betriebsschaltung 7 verbunden, welche die Spule 6 mit einem Betriebssignal betreibt. Das Betriebssignal kann eine Spannung mit einem zeitlich veränderlichen Verlauf sein und ist durch Betriebssignalparameter charakterisiert, wobei mindestens einer der Betriebssignalparameter regelbar ist. Das durch die Vorrichtung 5 zum Erzeugen des Magnetfeldes aufgebaute Magnetfeld wird durch einen mittels einer Betriebsschaltung 7 getakteten Gleichstrom wechselnder Polarität erzeugt. Dies gewährleistet einen stabilen Nullpunkt und macht die Messung unempfindlich gegenüber Einflüssen durch elektrochemische Störungen. Die zwei Spulen 6.1, 6.2 können separat mit der Betriebsschaltung 7 verbunden oder in Reihe bzw. parallel zueinander geschaltet sein.

Bei angelegtem Magnetfeld entsteht im Messrohr 2 eine durchflussabhängige Potentialverteilung, welche sich beispielsweise in Form einer induzierten Messspannung erfassen lässt. Eine Vorrichtung 8 zum Abgreifen der induzierten Messspannung ist am Messrohr 2 angeordnet. In der abgebildeten Ausgestaltung ist die Vorrichtung 8 zum Abgreifen der induzierten Messspannung durch zwei gegenüberliegend angeordnete Messelektroden 17, 18 zum Bilden eines galvanischen Kontaktes mit dem Medium gebildet. Es sind jedoch aus magnetisch-induktive Durchflussmessgeräte bekannt, die an der Außenwandung des Trägerrohres 3 angeordnete Messelektroden aufweise, die nicht mediumsberührend sind. In der Regel sind die Messelektroden 17, 18 diametral angeordnet und bilden eine Elektrodenachse bzw. werden durch eine Querachse geschnitten, die senkrecht zu den Magnetfeldlinien und der Längsachse des Messrohres 2 verläuft. Es sind aber auch Vorrichtungen 8 zum Abgreifen der induzierten Messspannung bekannt, welche mehr als zwei Messelektrode aufweisen. Anhand der gemessenen Messspannung kann die strömungsgeschwindigkeitsabhängigen Messgröße bestimmt werden. Die strömungsgeschwindigkeitsabhängigen Messgröße umfasst die Durchflussgeschwindigkeit, den Volumendurchfluss und/oder den Massedurchfluss des Mediums. Eine Messschaltung 8 ist dazu eingerichtet, die an den Messelektroden 17, 18 anliegende, induzierte Messspannung zu erfassen und eine Auswerteschaltung 24 ist dazu ausgebildet, die strömungsgeschwindigkeitsabhängigen Messgröße zu ermitteln.

Das Trägerrohr 3 ist häufig aus einem elektrisch leitfähigen Material gebildet, wie z.B. Stahl. Um das Ableiten der an der ersten und zweiten Messelektrode 2, 3 anliegenden Messspannung über das Trägerrohr 3 zu verhindern, wird die Innenwand mit einem isolierenden Material, beispielsweise einem (Kunststoff-)Liner 4 ausgekleidet.

Handelsübliche magnetisch-induktive Durchflussmessgeräte weisen zusätzlich zu den Messelektroden 17, 18 zwei weitere Elektroden 19, 20 auf. Zum einen dient eine optimalerweise am höchsten Punkt im Messrohr 2 angebrachte Füllstandsüberwachungselektrode 19 dazu, eine Teilbefüllung des Messrohres 1 zu detektieren, und ist dazu eingerichtet diese Information an den Nutzer weiterzuleiten und/oder den Füllstand bei der Ermittlung des Volumendurchflusses zu berücksichtigen. Des Weiteren dient eine Bezugselektrode 20, die üblicherweise diametral zur Füllstandsüberwachungselektrode 19 bzw. am untersten Punkt des Messrohrquerschnittes angebracht ist, dazu, ein kontrolliertes, elektrisches Potential im Medium einzustellen. In der Regel wird die Referenzelektrode 20 zum Verbinden des fließenden Mediums mit einem Erdpotential eingesetzt.

Die Betriebsschaltung 7, Reglerschaltung 10, Messschaltung 23 und Auswerteschaltung 24 können Teil einer einzelnen Elektronikschaltung sein, oder einzelne Schaltungen bilden.

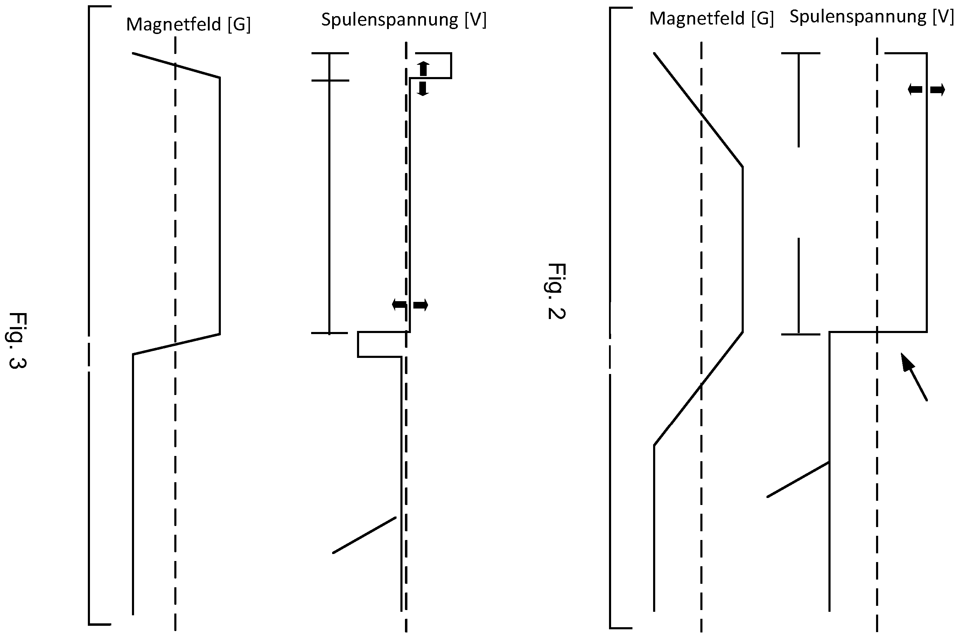

Die Betriebsschaltung 7 ist dazu eingerichtet, für ein erstes Zeitteilintervall eine erste Spannung und für ein zweites Zeitteilintervall eine zweite Spannung an die Spulenanordnung anzulegen. Dabei ist die zweite Spannung größer als die erste Spannung. Zudem folgt in einem einzelnen Zeitintervall das erste Zeitteilintervall auf das zweite Zeitteilintervall. Die Dauer des ersten Zeitteilintervalles ist größer als die Dauer des zweiten Zeitteilintervalles. Die Dauer des zweiten Zeitteilintervalles ist eine regelbare Größe. Ebenso die erste Spannung. Die Fig. 2 und Fig. 3 zeigen mögliche Ausgestaltungen des Betriebssignales.

Erfindungsgemäß ist die Reglerschaltung 10 dazu eingerichtet einen der Betriebssignalparametern des Betriebssignales so zu regeln, dass eine, von dem Selbstinduktionswert der Selbstinduktion und dem Spulenstromwert des Spulenstromes abhängige Funktion nicht von einem vorgegebenen ersten Sollwert abweicht. Die Reglerschaltung 10 ist bevorzugt dazu eingerichtet, einen der Betriebssignalparametern so zu regeln, dass ein Produkt des Selbstinduktionswertes und des Spulenstromwertes nicht von einem vorgegebenen ersten Sollwert abweicht. Dafür wird die erste Spannung und die Dauer des zweiten Zeitteilintervalles so geregelt, dass eine von der ersten Spannung und der Dauer des zweiten Zeitteilintervalles abhängige Größe nicht von einem zweiten Sollwert abweicht. Kommt es zu einer Abweichung - bedingt durch magnetische Störfelder oder Temperatureinflüsse - so werden die beiden Regelparameter angepasst, bis die Abweichung wieder minimal ist.

Die Fig. 2 zeigt eine erste Ausgestaltung des Betriebssignales und das entsprechend erzeugte Magnetfeld durch die Spule. Das Betriebssignal umfasst erfindungsgemäß eine Spannung mit einem zeitlich veränderlichen Verlauf 12, welcher in Zeitintervalle *t* eingeteilt ist. Das Vorzeichen der angelegten Spannung ändert sich in aufeinanderfolgenden Zeitintervallen *t*. Das in Fig. 2 abgebildete Betriebssignal umfasst Zeitintervalle *t*, die jeweils ein erstes Zeitteilintervall *t_{hold}* aufweisen, in denen über die gesamte Dauer des ersten Zeitteilintervalles *t_{hold}* eine konstante erste Spannung *U_{hold}* an die Spule angelegt wird. Die erfasste für die Ermittlung der strömungsgeschwindigkeitsabhängigen Messgröße induzierte Messspannung wird im ersten Zeitteilintervall *t_{hold}* ermittelt. Gemäß der ersten Ausgestaltung ist die Reglerschaltung dazu eingerichtet, die erste Spannung *U_{hold}* eines Zeitintervalles *t* so zu regeln, dass eine, von einem Selbstinduktionswert der Selbstinduktion *L* und einem Spulenstromwert des Spulenstromes *I* abhängige Funktion, insbesondere von einem Produkt der beiden genannten Werte abhängige Funktion nicht von einem vorgegebenen ersten Sollwert abweicht. Die erste Spannung *U_{hold}* ist erfindungsgemäß eine zeitlich veränderliche und regelbare Größe. Der Anstieg des Spulenstrom ist durch eine Zeitkonstante charakterisiert, welche über eine Messschaltung ermittelbar ist. Die erste Spannung *U_{hold}* kann so geregelt sein, dass eine von dem Produkt der Zeitkonstante und der ersten Spannung *U_{hold}* abhbängigen Größe nicht von einem vorgegebenen zweiten Sollwert abweicht.

Die Fig. 3 zeigt eine zweite Ausgestaltung des Betriebssignales und das erzeugte Magnetfeld durch die Vorrichtung zum Erzeugen des Magnetfeldes. Das Betriebssignal umfasst erfindungsgemäß eine Spannung mit einem zeitlich veränderlichen Verlauf 12, welcher in Zeitintervalle *t* eingeteilt ist. Das Vorzeichen der angelegten Spannung ändert sich in aufeinanderfolgenden Zeitintervallen *t.* Das in Fig. 2 abgebildete Betriebssignal umfasst Zeitintervalle *t,* die jeweils ein erstes Zeitteilintervall *t_{hold}* aufweisen, in denen über die gesamte Dauer des ersten Zeitteilintervalles *t_{hold}* eine konstante erste Spannung *U_{hold}* an die Spule angelegt wird. Die erfasste für die Ermittlung der strömungsgeschwindigkeitsabhängigen Messgröße induzierte Messspannung wird im ersten Zeitteilintervall *t_{hold}* ermittelt. Zudem weisen die Zeitintervalle *t* jeweils ein zweites Zeitteilintervall *tₛₕₒₜ* auf, in denen eine, insbesondere über die gesamte Dauer des zweiten Zeitteilintervalles *tₛₕₒₜ* konstante zweite Spannung *Uₛₕₒₜ* an die Spule angelegt ist. Dabei ist die zweite Spannung *Uₛₕₒₜ* größer als die erste Spannung *U_{hold}*. Im Spannungsverlauf folgt das erste Zeitteilintervall *t_{hold}* auf das zweite Zeitteilintervall *tₛₕₒₜ*. Zudem ist die Dauer des zweiten Zeitteilintervalles *tₛₕₒₜ* kleiner als die Dauer des ersten Zeitteilintervalles *t_{hold}*. Die Dauer des zweiten Zeitteilintervalles *tₛₕₒₜ* ist zeitlich veränderlich und regelbar. Ebenso die erste Spannung *U_{hold}*.

Die erste Spannung *U_{hold}* und die zweite Spannung *Uₛₕₒₜ* können so festgesetzt sein, dass ein Verhältnis zwischen der ersten Spannung *U_{hold}* und der zweiten Spannung *Uₛₕₒₜ* über den gesamten Verlauf 12 konstant ist. Das heißt, dass durch Regelung der ersten Spannung *U_{hold}* automatisch auch die zweite Spannung *Uₛₕₒₜ* proportional zu Änderung angepasst wird. Alternativ kann die zweite Spannung *Uₛₕₒₜ* über den gesamten Verlauf 12 einen konstanten Wert annehmen. Zusätzlich zur Regelung der ersten Spannung *U_{hold}* wird die Dauer des zweiten Zeitteilintervalles *tₛₕₒₜ* so geregelt ist, dass ein ermittelter Wert einer von einer Prüfgröße abhängigen Größe innerhalb der Dauer des zweiten Zeitteilintervalles *tₛₕₒₜ* einen Prüfsollwert annimmt. Dabei kann es sich bei der Größe beispielsweise um eine Summe oder eine Integral der Messwerte der Prüfgröße für einen vorgegebenen Zeitabschnitt handeln. Dabei werden die beiden Regelparameter so geregelt, dass eine von dem Produkt der ersten Spannung *U_{hold}* und der Dauer des zweiten Zeitteilintervalles *tₛₕₒₜ* abhängigen Funktion nicht von einem vorgegebenen zweiten Sollwert abweicht. Die von der ersten Spannung *U_{hold}* abhängige Funktion ist umgekehrt proportional zur Dauer des zweiten Zeitteilintervalles *tₛₕₒₜ*. Bei der Prüfgröße kann es sich um einen Messwert des Spulenstromes, einen zeitlichen Verlauf eines Spulenstromes und/oder einer davon abhängigen Größe handeln.

Die Reglerschaltung ist dazu eingerichtet, bei einer Abweichung eines Spulenprüfstromwertes oder einer von dem Spulenprüfstromwert abhängigen Prüfgröße von einem Sollwert in einem Zeitintervall *t_{N},* die Dauer des zweiten Zeitteilintervalles *tₛₕₒₜ* so zu ändern, dass die Abweichung in einem zeitlich darauffolgenden Zeitintervall *t_{N+M}* kleiner ist, wobei *M* ≥ 1 ist. Gleichzeitig ist die Reglerschaltung dazu eingerichtet, bei einer Abweichung des Ist-Wertes von einem Sollwert in einem Zeitintervall *t_{N},* die erste Spannung *U_{hold}* so zu ändern, dass die Abweichung von einem Sollwert in einem zeitlich darauffolgenden Zeitintervall *t_{N+M}* kleiner ist, wobei *M* ≥ 1. Dabei ist jedoch mindestens eine der obig gelisteten Bedingungen zu erfüllen. Die Reglerschaltung kann dazu eingerichtet sein, weitere Größen und/oder Funktionen zu regeln.

Gemäß einer weiteren Ausgestaltung ist eine Messschaltung dazu eingerichtet im ersten Zeitteilintervall *t_{hold}* einen maximalen Spulenstromwert *Iₘₐₓ* zu ermitteln und die die Dauer des zweiten Zeitteilintervalles *tₛₕₒₜ* und die von der erste Spannung *U_{hold}* abhängige Funktion so geregelt werden, dass eine Regelfunktion nicht von einem vorgegebenen zweiten Sollwert abweicht, wobei die Regelfunktion von einem Produkt der Dauer des zweiten Zeitteilintervalles *tₛₕₒₜ* und der von der erste Spannung *U_{hold}* und dem maximalen Spulenstromwert *Iₘₐₓ* abhängigen Funktion abhängt.

Alternativ kann die Reglerschaltung dazu eingerichtet sein, mindestens einen der Betriebssignalparameter so zu regeln, dass ein von einem Quotienten des maximalen Spulenstromwertes *Iₘₐₓ* und eines während des ersten Zeitteilintervalles *t_{hold}* ermittelten Spulenstromwertes *I_{hold}* über das Betriebssignal konstant ist.

Bei den zwei in Fig. 3 abgebildeten Verläufen handelt es sich um stark vereinfachte Schemata. Nach dem zweiten Zeitteilintervall kommt es in der Regel zu einem Einschwingen des Magnetfeldes.

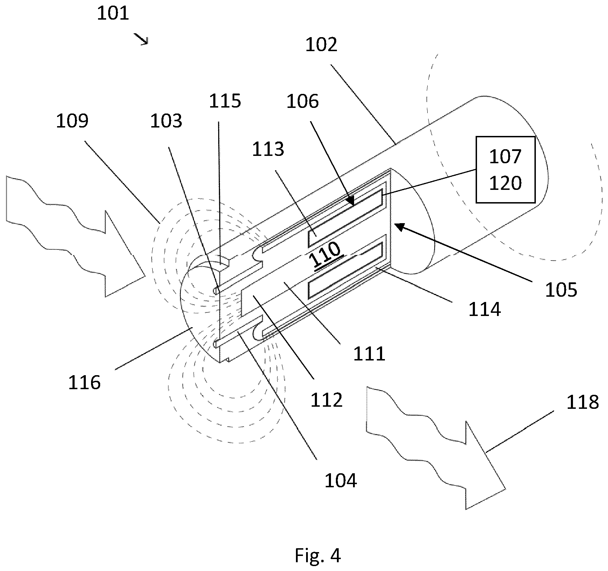

Anhand der perspektivischen und teilweise geschnittenen Darstellung der Fig. 4 wird zunächst das der Erfindung zugrunde liegende Messprinzip erläutert. Eine Durchflussmesssonde 101 umfasst ein im allgemeinen kreiszylindrisches, einen vorgegebenen Außendurchmesser aufweisendes Gehäuse 102. Dieses ist an den Durchmesser einer Bohrung angepasst, die sich in einer Wand einer in **Fig. 4** nicht dargestellten Rohrleitung befindet und in die die Durchflussmesssonde 101 fluiddicht eingesteckt ist. In der Rohrleitung strömt ein zu messendes Medium, in das die Durchflussmesssonde 101 praktisch senkrecht zur Strömungsrichtung des Mediums eintaucht, die durch die gewellten Pfeile 118 angedeutet ist. Ein in das Medium ragendes Frontende 116 des Gehäuses 102 ist mit einem Frontkörper 115 aus Isoliermaterial fluiddicht verschlossen. Mittels einer im Gehäuse 102 angeordneten Spulenanordnung 106 lässt sich ein durch den Endabschnitt hindurch, in das Medium hineinreichendes Magnetfeld 109 erzeugen. Ein mindestens teilweise aus einem weichmagnetischen Material bestehender, im Gehäuse 102 angeordneter Spulenkern 111 endet an oder in der Nähe des Endabschnittes 116. Ein Feldrückführungskörper 114, der die Spulenanordnung 106 und den Spulenkern 111 umschließt, ist dazu eingerichtet das aus dem Endabschnitt hindurchreichende Magnetfeld 109 in das Gehäuse 102 zurückzuführen. Der Spulenkern 111, der Polschuh 112 und der Feldrückführungskörper 114 sind jeweils Feldführungskörper 110, welche zusammen eine Feldführungsanordnung 105 bilden. Eine erste und eine zweite einen galvanischen Kontakt mit dem zu führenden Medium bildende Messelektrode 103, 104 bilden die Vorrichtung zum Erfassen einer im Medium induzierten Messspannung und sind in dem Frontkörper 115 angeordnet und berühren ebenso wie die Außenwände des Gehäuses das Medium. An den Messelektroden 103, 104 lässt sich eine aufgrund des Faraday'schen Induktionsgesetzes induzierte elektrische Spannung mittels einer Mess- und/oder Auswerteeinheit abgreifen. Diese ist maximal, wenn die Durchflussmesssonde 101 so in die Rohrleitung eingebaut ist, dass eine durch eine die beiden Messelektroden 103, 104 schneidende Gerade und eine Längsachse der Durchflussmesssonde aufgespannte Ebene senkrecht zu der Strömungsrichtung 118 bzw. Längsachse der Rohrleitung verläuft. Eine Betriebsschaltung 107 ist mit der Spulenanordnung 106, insbesondere mit der Spule 113 elektrisch verbunden und dazu eingerichtet ein getaktetes Betriebssignal auf die Spule 113 aufzuprägen, um somit ein getaktetes Magnetfeld 109 zu erzeugen. Die Reglerschaltung 120 ist dazu eingerichtet, mindestens einen der Betriebssignalparameter des Betriebssignales so zu regeln, dass eine, von einem Selbstinduktionswert der Selbstinduktion und einem Spulenstromwert des Spulenstromes abhängige Funktion nicht von einem vorgegebenen Sollwert abweicht. Dafür wird gemäß einer Ausgestaltung die von der ersten Spannung *U_{hold}* abhängige Funktion und die Dauer des zweiten Zeitteilintervalles *tₛₕₒₜ* so geregelt, dass sich beide umgekehrt proportional zueinander verhalten.

### Bezugszeichenliste

magnetisch-induktives Durchflussmessgerät 1
Messrohr 2
Trägerrohr 3
Liner 4
Vorrichtung zum Erzeugen eines Magnetfeldes 5
Spule 6
Betriebsschaltung 7
Vorrichtung zum Abgreifen einer induzierten Messspannung 8
Reglerschaltung 10
Betriebssignal 11
Verlauf 12
Spulenkern 14
Aufnahme der Spule 15
Messelektrode 17
Messelektrode 18
Füllstandsüberwachungselektrode 19
Referenzelektrode 20
Polschuh 21
Feldrückführung 22
Messschaltung 23
Auswerteschaltung 24
Spulenanordnung 25
magnetisch-induktive Durchflussmesssonde 101
Gehäuse 102
Messelektrode 103
Messelektrode 104
Feldführungsanordnung 105
Spulenanordnung 106
Betriebsschaltung 107
Magnetfeld 109
Feldführungskörper 110
Spulenkern 111
Polschuh 112
Spule 113
Feldrückführungskörper 114
Frontkörper 115
Endabschnitt 116
Strömungsrichtung des Mediums 118
Reglerschaltung 120

## Patentansprüche

1. Magnetisch-induktive Durchflussmessvorrichtung zum Ermitteln einer strömungsgeschwindigkeitsabhängigen Messgröße eines fließfähigen Mediums, umfassend:
- eine Vorrichtung (5) zum Erzeugen eines Magnetfeldes mit einer Selbstinduktivität (L),
wobei die Vorrichtung zum Erzeugen des Magnetfeldes eine Spulenanordnung (25) umfasst;
- eine Vorrichtung (8) zum Abgreifen einer im fließfähigen Medium induzierten Messspannung, insbesondere mindestens zwei bevorzugt diametral angeordnete Messelektroden (17, 18);
- eine Betriebsschaltung (7), welche dazu eingerichtet ist ein Betriebssignal (11), insbesondere ein Spannungssignal (12) an die Spulenanordnung (25) aufzubringen,
wobei das Betriebssignal (11) Betriebssignalparameter aufweist;
- eine Messschaltung (23), welche dazu eingerichtet ist einen Spulenstrom (*I*) der Spulenanordnung zu bestimmen;
- eine Reglerschaltung (10), welche dazu eingerichtet ist mindestens einen der Betriebssignalparametern so zu regeln, dass eine, von einem Selbstinduktionswert der Selbstinduktion (L) und einem Spulenstromwert des Spulenstromes (*I*) abhängige Funktion nicht von einem vorgegebenen ersten Sollwert abweicht,
wobei die Funktion von einem Produkt des Selbstinduktionswertes und des Spulenstromwertes abhängt,
wobei das Betriebssignal (11) einen, sich insbesondere zeitlich veränderlichen Spannungsverlauf (12) aufweist, welcher in Zeitintervalle (*t*) eingeteilt ist,
wobei ein Vorzeichen des Spannungsverlaufes (12) in aufeinanderfolgenden Zeitintervallen (*t*) alterniert,
wobei die Zeitintervalle (*t*) jeweils ein erstes Zeitteilintervall (*t_{hold}*) aufweist, in welchem eine, insbesondere über das gesamte erste Zeitteilintervall (*t_{hold}*) konstante erste Spannung (*U_{hold}*) an die Vorrichtung (5) zum Erzeugen des Magnetfeldes angelegt ist,
wobei die Messschaltung (23) dazu eingerichtet ist, den Spulenstromwert während des ersten Zeitteilintervalles (*t_{hold}*) zu messen,
wobei der geregelte Betriebssignalparameter eine von der erste Spannung (*U_{hold}*) abhängige Funktion umfasst oder die erste Spannung (*U_{hold}*) ist.

2. Magnetisch-induktive Durchflussmessvorrichtung nach Anspruch 1,
wobei der Spulenstrom einen Anstieg aufweist, der durch eine Zeitkonstante charakterisiert ist, welche über eine Messschaltung ermittelbar ist,
wobei die erste Spannung *U_{hold}* so geregelt ist, dass eine von dem Produkt der Zeitkonstante und der ersten Spannung *U_{hold}* abhbängigen Größe nicht von einem vorgegebenen zweiten Sollwert abweicht.

3. Magnetisch-induktive Durchflussmessvorrichtung nach mindestens einem der vorhergehenden Ansprüche, umfassend:
- eine Auswerteschaltung, welche dazu eingerichtet ist einen Ist-Wert einer von dem Selbstinduktionswert abhängigen Funktion zu ermitteln.

4. Magnetisch-induktive Durchflussmessvorrichtung nach mindestens einem der vorhergehenden Ansprüche,
wobei die magnetisch-induktive Durchflussmessvorrichtung als ein magnetisch-induktives Durchflussmessgerät (1) ausgestaltet ist, umfassend ein Messrohr (2) zum Führen des fließfähigen Mediums.

5. Magnetisch-induktive Durchflussmessvorrichtung nach mindestens einem der Ansprüche 1 bis 3,
wobei die magnetisch-induktive Durchflussmessvorrichtung als eine magnetisch-induktive Durchflussmesssonde (101) zum Einführen in eine seitliche Öffnung einer Rohrleitung ausgestaltet ist, umfassend ein mit dem Medium zu beaufschlageandes Gehäuse (102).
